# EUROPEAN PATENT SPECIFICATION

(11) **EP 3 613 570 B1**
(45) Date of publication and mention of the grant of the patent: **21.12.2022**
(21) Application number: 18190297.4
(22) Date of filing: 22.08.2018
(51) Int. Cl.: B29C 73/16

(54) **PUNCTURE SEALING AGENT AND PUNCTURE REPAIR SYSTEM**
DURCHSTICHABDICHTUNGSMITTEL UND DURCHSTICHREPARATURSYSTEM
AGENT D'OBTURATION DE PERFORATION ET SYSTÈME DE RÉPARATION DE PERFORATION

(43) Date of publication of application: 26.02.2020
(73) Proprietor: Sumitomo Rubber Industries, Ltd., Kobe-shi, Hyogo-ken (JP)
(72) Inventor: JIMENEZ, Angel J., Dr., 60314 Frankfurt am Main (DE); KOEGLER, Michael M., 63636 Brachttal (DE); ECKHARDT, Arnold, 63691 Ranstadt (DE); MAKI, Takashi, Hyogo 651-0072 (JP)
(74) Representative: Manitz Finsterwald Patent- und Rechtsanwaltspartnerschaft mbB

(56) References cited:
- WO-A1-2017/075673
- US-A- 6 063 837

## Description

The present invention is related to a puncture sealing agent having an excellent sealing performance for use in a puncture repair system.

In tire puncture repair systems a puncture sealing agent is used for sealing punctures in pneumatic tires. The puncture sealing agent is a liquid comprising a solid dispersion and is injected into a damaged tire. The tire is then filled with air with the aid of a compressor and can be used to travel in that condition. When traveling, the puncture sealing agent is shaken within the tire, and as a result, the solid content of the dispersion is deposited to cover the puncture hole.

In recent years the required level of performance for puncture sealing agents has increased. Most of the efforts have been put into improving the sealant performance, injectability, and/or the applicability in low-temperature environments while maintaining ideal storage performance.

Puncture sealing agents contain usually synthetic components for improving the sealing performance, injectability and/or the applicability in low-temperature environments while maintaining ideal storage performance. However, using synthetic components is not resource saving and environmentally friendly. In addition, there is room for improving the sealing properties of puncture sealing agents having sufficient low temperature injectabilities.

A puncture sealant agent is described in JP 2015-98538 A, wherein natural rubber is contained in an amount such that the solid content derived from natural rubber is 25 wt%, based on the total weight of the puncture sealant agent together with a rosin resin having a softening point of 90°C and propane-1,3-diol. In US 2015/0175862 A1a further puncture sealing agent is described which contains a rubber latex, propane-1,3-diol and a resin emulsion as tackifier, such as a terpene resin. However, there remains room for improvement with regard to low temperature injectability and seal retention performance.

In WO 2017/075673 A1 a puncture sealing agent is disclosed which comprises a liquid carrier latex in an amount between about 0.5 to 6.0 % by weight of the composition, a polysaccharide suspending agent in an amount between about 0.0025 to about 1.0% by weight of the total composition and a particulate material with a particle size of less than 300 µm.

In view of the above, the object underlying the present invention is to provide a puncture sealing agent, which is resource saving, environmentally friendly and has a sealing performance, injectability, and applicability in low-temperature environments comparable to conventionally used puncture sealing agents based on synthetic components.

In accordance with the present invention, this object is solved by a puncture sealing agent according to claim 1.

The puncture sealing agent according to the present invention comprises natural rubber latex, an aqueous solution of an adhesive and an antifreezing agent. The adhesive is a carbohydrate and the puncture sealing agent comprises a solid content resulting from the natural rubber latex in an amount of 21 wt% or less and the solid content resulting from the natural rubber is 9 wt% or more, based on the total weight of the puncture sealing agent.

This solution bases on the surprising finding that by combining in a puncture sealing agent a solid content derived from natural rubber latex of 9 to 21 wt%, based on 100 wt% of the puncture sealing agent, an aqueous solution of a carbohydrate as an adhesive and an antifreezing agent, a puncture sealing agent can be obtained which is at least primarily based on natural components and therefor resource saving and environmentally friendly. It was found that such a puncture sealing agent provides excellent sealing performance, injectability and applicability in low-temperature environments. In addition, by using carbohydrates as adhesives, it is possible to significantly reduce the costs for the puncture sealing agent, since the use of synthetic resins can be reduced or completely avoided. Accordingly, it is possible to reduce or even avoid the use of dangerous compounds and additives. Moreover, disposal of the puncture sealing agent according to the invention after expiry is easy and non-dangerous.

Another aspect of the present invention is a puncture repair system comprising a puncture sealing agent according to the present invention.

The present disclosure concerns also a method of producing a puncture sealing agent by mixing natural rubber latex, an aqueous solution of an adhesive and an antifreezing agent, wherein the adhesive is a carbohydrate and the puncture sealing agent comprises a solid content resulting from the natural rubber latex in an amount of 21 wt% or less, based on the total weight of the puncture sealing agent.

Preferred embodiments of the present invention are the subject-matter of dependent claims and described subsequently along with further preferred embodiments which are not expressly mentioned in the dependent claims.

Preferably, the puncture sealing agent comprises, based on 100 wt% of the puncture sealing agent, an amount of natural rubber latex, such that the solid content in the puncture sealing agent which is derived from the natural rubber latex is 19 wt% or less and even more preferably 17 wt% or less. It is also preferable that the puncture sealing agent comprises, based on 100 wt% of the puncture sealing agent, an amount of natural rubber latex, such that the solid content in the puncture sealing agent which is derived from the natural rubber latex is 11 wt% or more, even more preferably 12 wt% or more and most preferably 14 wt% or more. It is to be understood that the amount of solid content derived from natural rubber latex in the puncture sealing agent is, based on 100 wt% of the puncture sealing agent, preferably in the range of 9 wt% to 21 wt%, more preferably in the range of 11 wt% to 19 wt% and even more preferably in the range of 12 wt% to 17 wt% and even more preferably in the range of 14 to 17 wt%. However, also ranges of 9 wt% to 19 wt%, 11 wt% to 21 wt%, 14 wt% to 19 wt% as well as other ranges resulting from other combinations of the upper and lower limits mentioned above constitute preferred embodiments of the present invention. With the solid content derived from the natural rubber latex being included in the puncture sealing agent as described, the effects of the present invention can better be achieved. With this regard it is further preferable that in the puncture sealant agent the complete solid content derived from polymeric materials other than the dissolved carbohydrate in the aqueous solution of the adhesive and from polymeric surfactants is substantially identical to the solid content derived from the natural rubber latex.

Preferably, in the puncture sealing agent the solid content in the natural rubber latex is from 40 to 80 parts by mass, more preferably the solid content in the natural rubber latex is in the range of from 50 to 70 parts by mass and even more preferably in the range of from 55 to 60 parts by mass, based on 100 parts by mass of the natural rubber latex. With a solid content in the range of 40 to 80 parts by mass, a good balance between sealant performance and storage performance can be obtained.

Preferably, based on 100 wt% of the puncture sealing agent, the amount of natural rubber latex is 15 wt% or more, more preferably 18 wt% or more and even more preferably 20 wt% or more. If less than 15 wt% of natural rubber latex is contained in the puncture sealing agent, there is a risk that sealing of the puncture in the tire is insufficient or too slow and that the sealant performance is deteriorated. It is also preferably that, based on 100 wt% of the puncture sealing agent, the amount of natural rubber latex is 35 wt% or less, further preferably 32 wt% or less, more preferably 29 wt% or less and even more preferably 28 wt% or less. With the amount of natural rubber latex being less than 35 wt% preferable injectability and storage performance as well as applicability in low-temperature environments can be obtained. It is to be understood that the amount of natural rubber latex in the puncture sealing agent is, based on 100 wt% of the puncture sealing agent, preferably in the range of 15 wt% to 35 wt%, more preferably in the range of 18 wt% to 32 wt% and even more preferably in the range of 20 wt% to 29 wt% and even more preferably in the range of 20 to 27 wt%. However, also ranges of 15 wt% to 27 wt%, 20 wt% to 32 wt%, 18 wt% to 27 wt% as well as other ranges resulting from other combinations of the upper and lower limits mentioned above constitute preferred embodiments of the present invention.

With the amount of natural rubber latex being in said ranges, the above mentioned effects can be advantageously achieved.

The natural rubber used in the present invention is not particularly limited, and conventional natural rubber latex can be used. Specific examples of the natural rubber latex include the ones obtained from *Havea brasiliensis* by tapping, and so-called "deproteinized natural rubber latex", which is a protein-free natural rubber latex.

In the puncture sealing agent according to the invention it is preferable that, based on the total weight, i.e. 100 wt%, of the puncture sealing agent, the puncture sealing agent comprises the antifreezing agent in an amount of 30 wt% or more, more preferably in an amount of 33 wt% or more, even more preferably in an amount of 35 wt% or more and most preferably in an amount of 40 wt% or more.

Preferably, the antifreezing agent is at least one of glycerol, propylene glycol, ethylene glycol or propane-1,3-diol. These can be used as mixtures. However, it is even more preferred that the puncture sealing agent comprises only one of glycerol, propylene glycol, ethylene glycol or propane-1,3-diol as antifreezing agent and it is most preferred that the antifreezing agent consists of one of glycerol, propylene glycol, ethylene glycol or propane-1,3-diol in the above mentioned amount.

From an ecological point of view, it is preferred that in the puncture sealing agent the natural rubber latex, the aqueous solution of the adhesive and the antifreezing agent are natural components. With this regard, it is even more preferred that the combined content of all natural components of the puncture sealing agent is equal to or greater than 90 wt% based on the total mass of the puncture sealing agent. Most preferably, the puncture sealing agent is free from any synthetic resins. The low content or preferably absence of synthetic resin in the puncture sealing agent allows for a resource saving and environmentally friendly puncture sealing agent which can be easily disposed after expiry. It was also found that with a puncture sealing agent free of synthetic resins, excellent low temperature properties and excellent seal retention is obtained. In the context of this application, the term natural component refers to compounds and derivatives of compounds that can be found in nature and are not petroleum derived, i.e. a compounds that can be found in nature but which have been modified for example by a chemical reaction. Usually, synthetic resins are petroleum derived resins.

Concerning the adhesive, it is preferable that the puncture sealing agent comprises 10 to 30 wt% of the solution of the adhesive, based on the total weight of the puncture sealing agent. Such an amount of the solution of the adhesives allows that the puncture sealing agent has a good injectability and sealing performance.

With this regard it is also preferable that in the aqueous solution of the adhesive the mass ratio (Zₐ:Z_{b}) of mass of carbohydrate (Zₐ) to mass of solvent (Z_{b}) is in the range of from 90:10 to 50:50, more preferably in the range of from 80:20 to 55:40 and even more preferably in the range of from 70:30 to 60:40. If the ratio is greater than 90:10, there is a risk that the viscosity of the aqueous solution of the adhesive is increased and that the injectability is deteriorated. However, if the ratio is below 50:50, the time for sealing a puncture may increase and the sealing performance may be deteriorated.

It is preferable that the amount of carbohydrate in the puncture sealing agent, based on 100 wt% of the puncture sealing agent, is 4.4 wt% or more, more preferably 5.0 wt% or more, even more preferably 5.5 wt% or more and most preferably 6.0 wt.% or more.

In the puncture sealing agent the carbohydrate is preferably a monosaccharide, an oligosaccharide, a polysaccharide or a mixture thereof. Oligosaccharide are di- to decasaccharides, preferably di- to pentasaccharides. It is preferable that the carbohydrate is selected from the group consisting of sugars, starches and degraded starches and mixtures thereof, even more preferably from the group consisting of sugars and degraded starches. In accordance with an even more preferred embodiment of the present invention, the carbohydrate is a monosaccharide, an oligosaccharide or a mixture thereof. The monosaccharide may be a triose, tetrose, pentose, hexose, heptose or a mixture thereof, with hexoses, pentoses and mixtures thereof being particularly preferred. Some specific examples for monosaccharides are glycerinaldehyde, dihydroxyacetone, erythrose, threose, erythrulose, ribose, arabinose, xylose, lyxose, ribulose, xylulose, allose, altrose, gloxose, mannose, culose, idose, galactose, talose, psicose, fructose, fuculose, sorbose, tagatose, sedoheptulose, mannoheptulose, taloheptulose, alloheptulose, glucoheptose and mannoheptose. Among these monosaccharides mannose, fructose, glucose and mixtures thereof are preferred. Some specific examples for disaccharides include sucrose, lactulose, lactose, maltose, trehalose, cellobiose, chitobiose, kojibiose, nigerose, isomaltose, β,β-trehalose, α,β-trehalose, sophorose, laminaribiose, gentiobiose, turanose, maltulose, palatinose, gentiobiulose, mannobiose, melibiose, melibiulose, rutinose, rutinulose and xylobiose. Among these disaccharides sucrose, lactose and maltose are preferred.

Hydrolysates of starch, for example glucose syrup and/or glucose-fructose syrup or dextrin are preferably used as adhesive, since when using these, the costs for the puncture sealing agent are reduced. Dextrin, glucose syrup and glucose-fructose syrup are liquid starch hydrolysates including mono-, di-, and oligosaccharides and can be made from any source of starch, for example from wheat, tapioca and potatoes. Most preferably, the carbohydrate used as an adhesive is sucrose, glucose, fructose or a mixture of two or more of these. The use of sucrose is particularly preferred under the aspect of storage stability.

In the puncture sealing agent according to the present invention, the carbohydrate is included in the form of an aqueous solution, i.e. the carbohydrate is dissolved. To avoid precipitation of the carbohydrate in the puncture sealing agent, it is preferable that the carbohydrate has a water solubility at 20°C of 100g/L or more, more preferably of 300 g/L or more.

It is highly preferable that the puncture sealing agent according to the invention comprises at least one selected from the group consisting of sucrose, glucose, fructose and mixtures of two or more of these carbohydrates. Most preferably, the carbohydrate is sucrose.

It is preferred that the puncture sealing agent comprises a surfactant, particularly preferably, the amount of surfactant is equal to or less than 0.5 wt% and even more preferred equal to or less than 0.3 wt% based on the total weight of the puncture sealing agent. The surfactant improves the storage stability of the puncture sealing agent, since it prevents unwanted coagulation of rubber particles during storage. If more than 0.5 wt% surfactant is used, there is the risk that the sealing performance is deteriorated.

It is particularly preferred that the surfactant is a natural compound, i.e. not petroleum based. If the surfactant is a natural compound, the puncture sealing agent is resource saving and environmentally friendly. Natural surfactants can be anionic surfactants, amphoteric surfactants, cationic surfactants, non-ionic surfactants or mixtures thereof. Most preferably, the natural surfactant comprises at least one non-ionic surfactant.

Anionic surfactants have a negatively charged hydrophilic head and examples of anionic surfactants are sodium sulfates, ammonium sulfates, sulfosuccinates, sarcosines, sarcosinates, isethionates, taurates, alkylbenzene sulfonates, alkyl phosphates, and alkenyl succinates. Amphoteric surfactants have either a positive or negative charge, depending on the pH of the medium. Some examples for amphoteric surfactants are coco betaine, lauryl betaine, hydroxysultaines, alkyl dimethyl betaine and alkyl amide betaine. Cationic surfactants present a positively charged head at the hydrophilic part. Examples for cationic surfactants include chlorides of benzalkonium, stearalkonium, centrimonium and trimethyl ammonium compounds, methyl sulfates, alkylamine acetates, and quaternary ammonium salts. Nonionic surfactants have no ionic charge in their hydrophilic units. Some examples for nonionic surfactants include ethoxylates oxides, wax, emulsifying wax, glyceryl oleate, glyceryl stearate, PEGylated compounds such as ceteareths and sorbitans, lauryl glucoside, polyglycose, polyoxyethylene alcohol ethers, polyoxyethylene fatty acid esters, polyoxyethylenen alkylphenols, and polyoxyethylene-polyoxypropylene block polymers.

It is noted that the above described features of the puncture sealing agent can of course be combined with each other to give preferred embodiments of the invention. Accordingly, in preferred embodiments of the invention, the compounds and the value ranges for the compounds described above are independently chosen and combined with each other. This results in a large number of possible embodiments representing the invention, only a few of which are explicitly mentioned. The skilled person understands that it is possible to combine the subsequently mentioned preferred embodiments with each other and with the features described above.

Accordingly, one preferred exemplary embodiment of the puncture sealing agent, based on the total weight of the puncture sealing agent, comprises 15 to 35 wt% of a natural rubber latex, 10 to 30 wt% of the solution of the adhesive and 30 wt% or more of an antifreezing agent, wherein the natural rubber latex has a solid content of 40 to 80 parts by mass, based on 100 parts by mass of the natural rubber latex.

In another preferred exemplary embodiment, the adhesive is selected from the group consisting of sucrose, glucose, fructose and mixtures of two or more of these carbohydrates and the antifreezing agent is at least one selected from the group consisting of glycerol, propylene glycol, ethylene glycol or propane-1,3-diol and mixtures thereof.

According to a further preferred exemplary embodiment, the puncture sealing agent comprises, based on 100 wt% of the puncture sealing agent, natural rubber latex in an amount, such that the solid content in the puncture sealing agent which is derived from the natural rubber latex is 21 wt% or less, and a surfactant.

According to a further preferred exemplary embodiment, in the puncture sealing agent, based on 100 wt% of the puncture sealing agent, the amount of natural rubber latex is such that in the puncture sealing agent the solid content derived from natural rubber is 19 wt% or less, and, also based on 100 wt% of the puncture sealing agent, the amount of carbohydrate is 4.4 wt% or more, wherein it is even more preferable that the carbohydrate is a monosaccharide, an oligosaccharide, a polysaccharide or a mixture thereof, further preferably, the carbohydrate is selected from the group consisting of sugars and degraded starches.

In another preferred exemplary embodiment, in the puncture sealing agent, based on 100 wt% of the puncture sealing agent, the amount of carbohydrate is 6.0 wt% or more and the carbohydrate is an oligosaccharide, in particular a disaccharide, for example sucrose.

According to a further preferred exemplary embodiment, the puncture sealing agent comprises, based on 100 wt% of the puncture sealing agent, natural rubber latex in an amount, such that the solid content in the puncture sealing agent which is derived from the natural rubber latex is in the range of 9 to 19 wt%, and the carbohydrate is at least one having a solubility in water of 100g/L at a temperature of 20°C.

In a further preferred exemplary embodiment, the puncture sealing agent comprises the antifreezing agent, based on 100 wt% of the puncture sealing agent, in an amount of 33 wt% or more, wherein the antifreezing agent is at least one of ethylene glycol, propylene glycol, propane-1,3-diol and glycerol, and wherein the carbohydrate is at least one of sucrose, fructose and dextrin.

The puncture repair system preferably comprises a container for storing the puncture sealing agent of the present invention and a compressor for filling a tire with air.

Subsequently, the present invention is described by means of examples, which do, however, not limit the present patent application.

Preparation of Examples 1 to 8 and of Comparative Examples 1 and 2:
For preparing the puncture sealing agents according to Examples 1 to 8 and of Comparative Examples 1 and 2 the components indicated in Table 1 below were mixed at the proportions listed in Table 1 under vigorous stirring.

The components used in the preparation of the examples and comparative examples are described below:
Natural rubber latex: HA Latex, solid content: 60 mass %, obtained from Centrotrade Minerals & Metals, Inc
Tackifier 1: An aqueous dispersion of resin containing resin acids, rosin acids, and potassium salts (solid content: 40 mass %, Aquatac^{™} dispersion produced by Kraton Corporation)
Tackifier 2: Ethylene vinyl acetate copolymer dispersion (solid content: 40 mass%, produced by Porex corporation).
Carbohydrates: sucrose, fructose and dextrin were obtaind from Sigma-Aldrich.
Solution of adhesive A: a solution of sucrose in water in a concentration of 60 g sucrose in 30 g water was prepared under vigorous stirring.
Solution of adhesive B: a solution of fructose in water in a concentration of 50 g glucose in 50 g water was prepared under vigorous stirring.
Solution of adhesive C: a solution of dextrin in water in a concentration of 50 g dextrin in 50 g water was prepared under vigorous stirring.
Solution of adhesive D: a solution of sucrose in water in a concentration of 50 g sucrose in 50 g water was prepared under vigorous stirring.
Solution of adhesive E: a solution of sucrose in water in a concentration of 70 g sucrose in 30 g water was prepared under vigorous stirring.
Surfactant: Emulgen 420 manufactured by Kao Corporation
Antifreezing agents: ethylene glycol, propylene glycol, propane-1,3-diol and glycerol have been purchased from Sigma-Aldrich.

The viscosity was measured in accordance with DIN EN ISO 2555. The density of the puncture sealants was measured in accordance with DIN 51757 at room temperature. Results of the viscosity measurement at 20 °C, -30°C and at -40°C and of the density measurement are summarized in table 2. At room temperature, the puncture sealant agents according to the invention have viscosities and densities similar to that of the puncture sealant according to comparative example 1. However, at -40°C the puncture sealant agent according to comparative example 1 is not liquid.

In order to check the injectability of the tire puncture sealing agents of Examples 1 to 8 and of Comparative Examples 1 and 2, the content of a 450 mL bottle filled with a tire puncture sealing agent was pumped through a tire valve with the help of a 15 A compressor into a 36 L container to check if the material can be injected trough the tire valve without clogging the tire valve. The Δ pump-values listed in Table 3 represent the differences in pressure between the pressure observed on the side of the 450 mL bottle and the pressure observed on the side of the 36 L container. A smaller value indicates that the material can be better injected. The values listed in Table 3 correspond to the pressure difference measured after 5 minutes at different temperatures indicated in Table 3.

The road tests were performed using 205/55 R16 Falken Ziex 914 tires. A puncture hole having a diameter of 6 mm was made in the shoulder groove portion of the tread of a tire. Next, 450 mL of the puncture sealing agent were injected via the tire valve and the tire was filled with the aid of a compressor until a pressure of 2.5 bar was reached. The tire was then subjected to intermittent driving. The tire was driven for 5 minutes at a speed of no more than 50 Km/h and then controlled. The intermittent driving test was repeatedly carried out until there was no more air leakage and the tire presented a tight status, i.e. no bubbling effect observed after spraying water in the vicinity of the puncture hole evidenced by the fact that the ultimate tire pressure measurement equaled or exceeded the previous tire pressure measurement. The measured values are listed in Table 3.

The puncture sealing and loss of air performance was evaluated in both summer and winter times. The results are shown in Table 3 and evaluation was carried out on a scale of AA to C, wherein the marks have the meaning explained below. It is noted that AA is the best mark, A is better than B and B is better than C:
"AA": succesfully accomplished after no more than 5 minutes.
"A": succesfully accomplished after more than 5 minutes and not more than 10 minutes.
"B": succesfully accomplished after more than 10 minutes and not more than 15 minutes.
"C": succesfully accomplished after more than 15 minutes and not more than 30 minutes.

Puncture sealant agents evaluated with the mark "AA" in loss of air -see Table 3- and the sealant agents according to Comparative Examples 1 and 2 were tested by means of seal retention. Accordingly, to test the long-term performance of the puncture sealing agent, a seal retention test was carried out during summer, after the above-mentioned driving test. Evaluation of the same is also represented in Table 3. The puncture sealant agents of Examples 1, 6, 7, and 8 and of comparative examples 1 and 2 were injected in damages tires (205/55 R16 Falken Ziex 914 with a puncture hole having a diameter of 6 mm in the shoulder groove portion of the tread) and a 300 Km driving test was performed. As shown in Table 3, after driving 100 Km/h for 300 Km no air leakage was observed, which indicates a tire with a tightly sealed puncture and seal retention was evaluated with +. A certain degree of air leakage was observed when the puncture sealing agents of comparative examples 1 and 2 were used and the seal retention was evaluated with +/-.

The results were fully satisfactory for the puncture sealing agents according to Examples 1, 6, 7, and 8.

To test the storage porperties, accelerated stability tests were perfomed causing the true state of the dispersion to change or at least to be stressed. The aging experiments were carried out in accordance with ISO TR 13097. In this particular case, the prepared puncture samples were allowed to stand for 15 days at a temperature of 70 °C. Creaming phenomenon was determined in accordance with ISO 13318-2 on a four-point scale: L (remained liquid), SC (changed to slightly creamy), C (changed to be creamy), and S (solidified). The results are summarized in Table 3.

Comparative Examples 1 and 2 demonstrate further that replacing a synthetic resin, such as ethylene vinyl acetate copolymer dispersion by a natural resin, such as the one used as tackifier 1 in Comparative Example 1 neither improves the seal retention and can result in a puncture sealing agent being not liquid at -40°C.

**Table 1:**

| Amount of component in wt% | Comp. Ex. 1 | Comp. Ex. 2 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Natural rubber latex | 25 | 25 | 25 | 25 | 25 | 25 | 25 | 25 | 25 | 25 |
| Water | 18.6 | 18.6 | 18.6 | 18.6 | 18.6 | 18.6 | 18.6 | 18.6 | 18.6 | 18.6 |
| Tackifier 1 | 11 | | | | | | | | | |
| Tackifier 2 | | 11 | | | | | | | | |
| Solution of adhesive A | | | 11 | | | | | 11 | 11 | 11 |
| Solution of adhesive B | | | | 11 | | | | | | |
| Solution of adhesive C | | | | | 11 | | | | | |
| Solution of adhesive D | | | | | | 11 | | | | |
| Solution of adhesive E | | | | | | | 11 | | | |
| Surfactant | 0.4 | 0.4 | 0.4 | 0.4 | 0.4 | 0.4 | 0.4 | 0.4 | 0.4 | 0.4 |
| Ethylene glycol | 45 | 45 | 45 | 45 | 45 | 45 | 45 | | | |
| Propylene glycole | | | | | | | | | | 45 |
| Propane-1,3-diol | | | | | | | | | 45 | |
| Glycerol | | | | | | | | 45 | | |

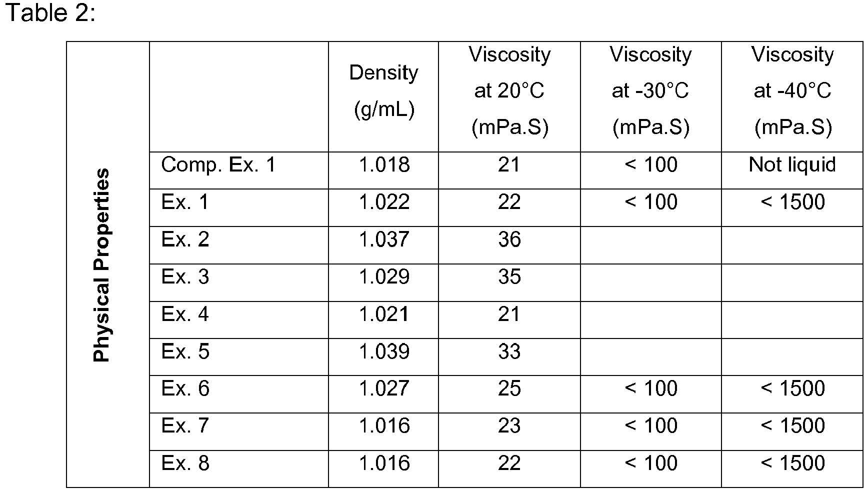

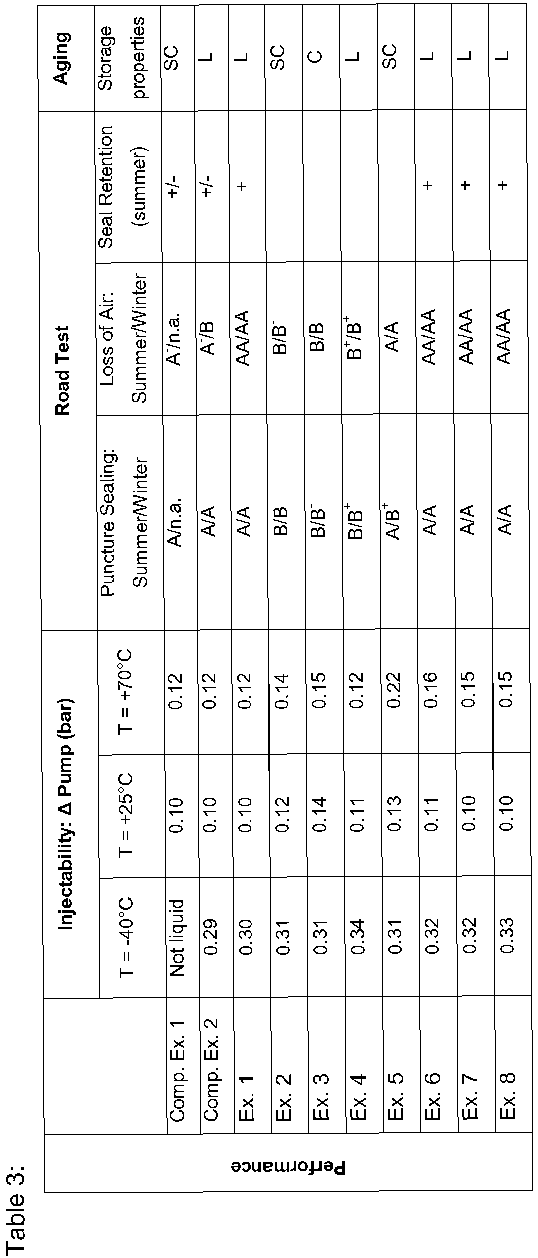

## Claims

1. Puncture sealing agent, comprising:
natural rubber latex, an aqueous solution of an adhesive and an antifreezing agent,
**characterized in that**
the adhesive is a carbohydrate and **in that** the puncture sealing agent comprises a solid content resulting from the natural rubber latex in an amount of 21 wt% or less, based on the total weight of the puncture sealing agent, wherein the solid content resulting from the natural rubber is, based on the total weight of the puncture sealing agent, 9 wt% or more.

2. Puncture sealing agent according to claim 1,
wherein the solid content resulting from the natural rubber is, based on the total weight of the puncture sealing agent, 19 wt% or less, preferably 17 wt% or less.

3. Puncture sealing agent according to claim 1 or 2,
wherein the solid content resulting from the natural rubber is, based on the total weight of the puncture sealing agent, 11 wt% or more, more preferably 12 wt% or more and even more preferably 14 wt% or more.

4. Puncture sealing agent according to any of the preceding claims,
wherein the puncture sealing agent comprises 30 wt% or more of the antifreezing agent based on the total weight of the puncture sealing agent.

5. Puncture sealing agent according to any of the preceding claims,
wherein the antifreezing agent is at least one of glycerol, propylene glycol, ethylene glycol or propane-1,3-diol, preferably only one of glycerol, propylene glycol, ethylene glycol or propane-1,3-diol.

6. Puncture sealing agent according to any of the preceding claims,
wherein the natural rubber latex, the aqueous solution of the adhesive and the antifreezing agent are natural components.

7. Puncture sealing agent according to claim 5,
wherein the combined content of all natural components of the puncture sealing agent is equal to or greater than 90 wt% based on the total mass of the puncture sealing agent.

8. Puncture sealing agent according to any of the preceding claims,
wherein the puncture sealing agent comprises 10 to 30 wt% of the solution of the adhesive, based on the total weight of the puncture sealing agent.

9. Puncture sealing agent according to any of the preceding claims,
wherein the amount of carbohydrate in the puncture sealing agent is 4.4 wt% or more, preferably 5.0 wt% or more, more preferably 5.5 wt% or more and most preferably 6.0 wt.% or more, based on the total weight of the puncture sealing agent.

10. Puncture sealing agent according to any of the preceding claims,
wherein in the aqueous solution of the adhesive, the mass ratio (Zₐ:Z_{b}) of mass of dissolved carbohydrate (Zₐ) to mass of solvent (Z_{b}) is in the range of from 90:10 to 50:50.

11. Puncture sealing agent according to any of the preceding claims,
wherein the puncture sealing agent comprises 9 to 19 wt% solid content derived from natural rubber latex, 10 to 30 wt% of the solution of the adhesive and 30 wt% or more of an antifreezing agent, all based on the total weight of the puncture sealing agent.

12. Puncture sealing agent according to any of the preceding claims,
wherein the carbohydrate is selected from the group consisting of sugars, starches and degraded starches and mixtures thereof, preferably from the group consisting of sugars and degraded starches and mixtures thereof, more preferably the carbohydrate is sucrose, glucose, fructose or a mixture thereof.

13. Puncture sealing agent according to any of the preceding claims,
wherein the puncture sealing agent comprises a surfactant, wherein the amount of surfactant is preferably less than 0.5 wt% based on the total weight of the puncture sealing agent.

14. Puncture sealing agent according to any of the preceding claims,
wherein the solid content in the natural rubber latex is from 40 to 80 parts by mass based on 100 parts by mass of puncture sealing agent.

15. Puncture repair system comprising a puncture sealing agent according to any of the preceding claims.

## Patentansprüche

1. Pannendichtmittel, welches umfasst:
Naturkautschuklatex, eine wässrige Lösung eines Klebstoffes und ein Gefrierschutzmittel,
**dadurch gekennzeichnet, dass**
der Klebstoff ein Kohlenhydrat ist, und dass das Pannendichtmittel einen aus dem Naturkautschuklatex stammenden Feststoffgehalt in einer Menge von 21 Gewichtsprozent oder weniger umfasst, bezogen auf das Gesamtgewicht des Pannendichtmittels, wobei der aus dem Naturkautschuk stammende Feststoffgehalt, bezogen auf das Gesamtgewicht des Pannendichtmittels, 9 Gewichtsprozent oder mehr beträgt.

2. Pannendichtmittel nach Anspruch 1,
wobei der aus dem Naturkautschuk stammende Feststoffgehalt, bezogen auf das Gesamtgewicht des Pannendichtmittels, 19 Gewichtsprozent oder weniger, bevorzugt 17 Gewichtsprozent oder weniger beträgt.

3. Pannendichtmittel nach Anspruch 1 oder 2,
wobei der aus dem Naturkautschuk stammende Feststoffgehalt, bezogen auf das Gesamtgewicht des Pannendichtmittels, 11 Gewichtsprozent oder mehr, bevorzugter 12 Gewichtsprozent oder mehr, und noch bevorzugter 14 Gewichtsprozent oder mehr beträgt.

4. Pannendichtmittel nach einem der vorangehenden Ansprüche,
wobei das Pannendichtmittel 30 Gewichtsprozent oder mehr des Gefrierschutzmittels umfasst, bezogen auf das Gesamtgewicht des Pannendichtmittels.

5. Pannendichtmittel nach einem der vorangehenden Ansprüche,
wobei das Gefrierschutzmittel mindestens eines von Glycerin, Propylenglykol, Ethylenglykol oder Propan-1,3-diol ist, bevorzugt nur eines von Glycerin, Propylenglykol, Ethylenglykol oder Propan-1,3-diol.

6. Pannendichtmittel nach einem der vorangehenden Ansprüche,
wobei der Naturkautschuklatex, die wässrige Lösung des Klebstoffes und das Gefrierschutzmittel natürliche Bestandteile sind.

7. Pannendichtmittel nach Anspruch 5,
wobei der Gehalt aller natürlichen Bestandteile des Pannendichtmittels zusammengenommen gleich oder größer als 90 Gewichtsprozent ist, bezogen auf die Gesamtmasse des Pannendichtmittels.

8. Pannendichtmittel nach einem der vorangehenden Ansprüche,
wobei das Pannendichtmittel 10 bis 30 Gewichtsprozent der Lösung des Klebstoffes umfasst, bezogen auf das Gesamtgewicht des Pannendichtmittels.

9. Pannendichtmittel nach einem der vorangehenden Ansprüche,
wobei die Menge an Kohlenhydrat in dem Pannendichtmittel 4,4 Gewichtsprozent oder mehr beträgt, bevorzugt 5,0 Gewichtsprozent oder mehr, bevorzugter 5,5 Gewichtsprozent oder mehr, und am bevorzugtesten 6,0 Gewichtsprozent oder mehr, bezogen auf das Gesamtgewicht des Pannendichtmittels.

10. Pannendichtmittel nach einem der vorangehenden Ansprüche,
wobei in der wässrigen Lösung des Klebstoffes das Massenverhältnis (Zₐ:Z_{b}) der Masse an gelöstem Kohlenhydrat (Zₐ) zur Masse an Lösungsmittel (Z_{b}) im Bereich von 90:10 bis 50:50 liegt.

11. Pannendichtmittel nach einem der vorangehenden Ansprüche,
wobei das Pannendichtmittel 9 bis 19 Gewichtsprozent von Naturkautschuklatex herrührenden Feststoffgehalt, 10 bis 30 Gewichtsprozent der Lösung des Klebstoffes und 30 Gewichtsprozent oder mehr eines Gefrierschutzmittels umfasst, alle bezogen auf das Gesamtgewicht des Pannendichtmittels.

12. Pannendichtmittel nach einem der vorangehenden Ansprüche,
wobei das Kohlenhydrat aus der Gruppe bestehend aus Zuckern, Stärken und abgebauten Stärken und Mischungen derselben ausgewählt ist, bevorzugt aus der Gruppe bestehend aus Zuckern und abgebauten Stärken und Mischungen derselben, bevorzugter das Kohlenhydrat Saccharose, Glucose, Fructose oder eine Mischung derselben ist.

13. Pannendichtmittel nach einem der vorangehenden Ansprüche,
wobei das Pannendichtmittel ein Tensid umfasst, wobei die Menge an Tensid bevorzugt weniger als 0,5 Gewichtsprozent beträgt, bezogen auf das Gesamtgewicht des Pannendichtmittels.

14. Pannendichtmittel nach einem der vorangehenden Ansprüche,
wobei der Feststoffgehalt in dem Naturkautschuklatex von 40 bis 80 Massenteile beträgt, bezogen auf 100 Massenteile des Pannendichtmittels.

15. Pannenreparatursystem, welches ein Pannendichtmittel nach einem der vorangehenden Ansprüche umfasst.

## Revendications

1. Agent d'obturation de perforation, comprenant :
un latex de caoutchouc naturel, une solution aqueuse d'un adhésif et un agent anticongélation,
**caractérisé en ce que**
l'adhésif est un sucre et **en ce que** l'agent d'obturation de perforation comprend une teneur en solides résultant du latex de caoutchouc naturel en une quantité de 21 % en poids ou moins, sur la base du poids total de l'agent d'obturation de perforation,
la teneur en solides résultant du caoutchouc naturel étant, sur la base du poids total de l'agent d'obturation de perforation, de 9 % en poids ou plus.

2. Agent d'obturation de perforation selon la revendication 1,
dans lequel la teneur en solide du caoutchouc naturel est, sur la base du poids total de l'agent d'obturation de perforation, de 19 % en poids ou moins, de préférence de 17 % en poids ou moins.

3. Agent d'obturation de perforation selon la revendication 1 ou 2,
dans lequel la teneur en solides du caoutchouc naturel est, sur la base du poids total de l'agent d'obturation de perforation, de 11 % en poids ou plus, davantage de préférence de 12 % en poids ou plus et encore davantage de préférence de 14 % en poids ou plus.

4. Agent d'obturation de perforation selon l'une quelconque des revendications précédentes,
dans lequel l'agent d'obturation de perforation comprend 30 % en poids ou plus de l'agent anticongélation sur la base du poids total de l'agent d'obturation de perforation.

5. Agent d'obturation de perforation selon l'une quelconque des revendications précédentes,
dans lequel l'agent anticongélation est au moins un du glycérol, du propylène glycol, de l'éthylène glycol ou du propane-1,3-diol, de préférence seulement un du glycérol, du propylène glycol, de l'éthylène glycol ou du propane-1,3-diol.

6. Agent d'obturation de perforation selon l'une quelconque des revendications précédentes,
dans lequel le latex de caoutchouc naturel, la solution aqueuse de l'adhésif et l'agent anticongélation sont des composants naturels.

7. Agent d'obturation de perforation selon la revendication 5,
dans lequel la teneur combinée de tous les composants naturels de l'agent d'obturation de perforation est supérieure ou égale à 90 % en poids sur la base de la masse totale de l'agent d'obturation de perforation.

8. Agent d'obturation de perforation selon l'une quelconque des revendications précédentes,
dans lequel l'agent d'obturation de perforation comprend 10 à 30 % en poids de la solution de l'adhésif, sur la base du poids total de l'agent d'obturation de perforation.

9. Agent d'obturation de perforation selon l'une quelconque des revendications précédentes,
dans lequel la quantité de sucre dans l'agent d'obturation de perforation est de 4,4 % en poids ou plus, de préférence de 5,0 % en poids ou plus, davantage de préférence de 5,5 % en poids ou plus et de préférence entre toutes de 6,0 % en poids ou plus, sur la base du poids total de l'agent d'obturation de perforation.

10. Agent d'obturation de perforation selon l'une quelconque des revendications précédentes,
dans lequel la solution aqueuse de l'adhésif, le rapport en masse (Zₐ:Z_{b}) de la masse de sucre dissous (Zₐ) à la masse du solvant (Z_{b}) se situe dans la plage de 90:10 à 50:50.

11. Agent d'obturation de perforation selon l'une quelconque des revendications précédentes,
dans lequel l'agent d'obturation de perforation comprend de 9 à 19 % en poids de teneur en solides dérivée du latex de caoutchouc naturel, de 10 à 30 % en poids de la solution de l'adhésif et de 30 % en poids ou plus de l'agent anticongélation, tous basés sur le poids total de l'agent d'obturation de perforation.

12. Agent d'obturation de perforation selon l'une quelconque des revendications précédentes,
dans lequel le sucre est choisi dans le groupe constitué par les sucres, les amidons et les amidons dégradés et leurs mélanges, de préférence dans le groupe constitué par les sucres et les amidons dégradés et leurs mélanges, davantage de préférence le sucre est le saccharose, le glucose, le fructose ou un de leurs mélanges.

13. Agent d'obturation de perforation selon l'une quelconque des revendications précédentes,
dans lequel l'agent d'obturation de perforation comprend un tensioactif, la quantité du tensioactif étant de préférence de moins de 0,5 % en poids sur la base du poids total de l'agent d'obturation de perforation.

14. Agent d'obturation de perforation selon l'une quelconque des revendications précédentes,
dans lequel la teneur en solides dans le latex de caoutchouc naturel est de 40 à 80 parties en masse sur la base de 100 parties en masse de l'agent d'obturation de perforation.

15. Système de réparation de perforation comprenant un agent d'obturation de perforation selon l'une quelconque des revendications précédentes.
